# EUROPEAN PATENT APPLICATION

(11) **EP 1 528 765 A1**
(43) Date of publication of application: **04.05.2005**
(21) Application number: 03078429.2
(22) Date of filing: 31.10.2003
(51) Int. Cl.: H04M 1/57, H04M 1/725

(54) **Call alerting using transmitted media objects**

(71) Applicant: Sony Ericsson Mobile Communications AB, 221 88 Lund (SE)
(72) Inventor: Andersson, Magnus, 211 30 Malmö (SE)
(74) Representative: Dahnér, Christer

(57) **Abstract**

The present invention relates to a method, portable communication device, computer program product and computer program element for sending additional data with a call for use in alerting a called party as well as a method, portable communication device, computer program product and computer program element for using additional data received in relation to a call. The portable communication device (10) of a calling party comprises a control unit (32) that selects a media object and provides the media object for transmission to a called party phone via a communication unit (28) during the setting up of the voice connection. The portable communication device of the called party comprises a communication unit receiving the media object, an alerting unit (20, 36; 24, 38) and a control unit (32) retrieving the media object from the communication unit and providing the alerting unit with the media object for alerting the called party.

## Description

### TECHNICAL FIELD OF THE INVENTION

The present invention relates to the field of telecommunication and then the alerting of a called party of an incoming phone call. More particularly the present invention relates to method, portable communication device, computer program product and computer program element for sending additional data with a call for use in alerting a called party as well as a method, portable communication device, computer program product and computer program element for using additional data received in relation to a call.

### DESCRIPTION OF RELATED ART

It is known within the field of portable communication devices to alert a called party about an incoming call by using a ring signal. At the same it is possible to also display the phone number of the calling party to the called party. If the calling party is known by the called party, i.e. the called party has the phone number of the calling party in his phone book or on a SIM card, it is furthermore possible to for instance display a photo of the calling party to the called party. In this case the called party has to have the photo stored in the phone and linked to the phone book beforehand. There does however not seem to exist a way for the calling party to provide more information to the called party than the phone number when in the process of alerting a call.

It would however be beneficial to provide additional data in relation to a call that can be used when alerting the called party. This data could then enhance the experience of the call for the called party.

It is furthermore known to provide data together with voice in relation to a voice connection. WO99/31895 describes the use of a voice channel and speech coders for transmitting data over the voice channel using formant frequencies for transmitting the data. WO96/09708 describes transmitting both speech and data on a wireless circuit switched channel. Here data is sent during breaks. This latter document also describes data being sent on a control channel during breaks in transmission of speech on the voice channel. Generally though, both these documents discuss the transmitting of data at the same time or together with speech and can therefore not be used for alerting a called party about a call.

### SUMMARY OF THE INVENTION

The present invention is directed towards solving the problem of providing additional data for alerting of a call, which can be used to enhance the experience of the call for a called party.

This problem is according to the invention solved through selecting a media object and sending it from a calling party to a called party during the setting up of a voice connection. This media object can then be used for alerting the called party.

One object of the present invention is to provide a method of sending additional data with a call for use in alerting a called party, which can be used to enhance the experience of the call for a called party.

According to a first aspect of the present invention this object is achieved by a method of providing additional data in relation to a call for use in alerting a called party comprising the steps of:
selecting, by or for a calling party, at least one media object for use in alerting a called party of a phone call,
setting up a voice connection to a called party phone, and
transmitting the object to the called party phone during the setting up of the voice connection, such that the called party can use the media object when being alerted about the phone call provided over the connection.

A second aspect of the present invention includes the features of the first aspect, wherein the object is transmitted in the signaling phase for setting up the connection.

A third aspect of the present invention includes the features of the first aspect, wherein the object is of a certain type and the step of transmitting the object includes transmitting also a type identifier.

A fourth aspect of the present invention includes the features of the first aspect, wherein the object is one of the objects in the group of: image, text, video clip, voice message and/or ring tone.

A fifth aspect of the present invention includes the features of the first aspect, wherein the step of selecting further comprises selecting at least one call relevance flag for the call and the step of transmitting comprises transmitting also the call relevance flag.

A sixth aspect of the present invention includes the features of the fifth aspect, wherein the call relevance flag is a flag indicating the priority of the call according to the calling party.

A seventh aspect of the present invention includes the features of the fifth aspect, wherein the call relevance flag is a flag indicating the mood of the calling party.

Another object of the present invention is to provide a portable communication device that provides additional data in relation to a call, which can be used to enhance the experience of the call for a called party.

According to an eighth aspect of the present invention, this object is achieved by a portable communication device for sending additional data with a call for use in alerting a called party and comprising:
a control unit arranged to select or receive a selection of, by a user, at least one media object for use in alerting a called party of a phone call and provide the media object for transmission to the called party, and
a communication unit arranged to set up a voice connection to a called party phone and transmit the object to the called party phone during the setting up of the voice connection, such that the called party can use the media object when being alerted about the phone call.

A ninth aspect of the present invention includes the features of the eighth aspect, wherein the communication unit is arranged to transmit the object in the signaling phase for setting up the connection.

A tenth aspect of the present invention includes the features of the eighth aspect, wherein the object is of a certain type and the step of transmitting the object includes transmitting also a type identifier.

An eleventh aspect of the present invention includes the features of the eighth aspect, further comprising a media object storage for storing media objects.

A twelfth aspect of the present invention includes the features of the eighth aspect, wherein the object is one of the objects in the group of: image, text, video clip, voice message and/or ring tone.

A thirteenth aspect of the present invention includes the features of the eighth aspect, wherein the control unit, when selecting, is further arranged to select at least one call relevance flag for the call and the communication unit is arranged to transmit also the call relevance flag.

A fourteenth aspect of the present invention includes the features of the eighth aspect, wherein it is a cellular phone.

Another object of the present invention is to provide a computer program product that enables the provision of additional data in relation to a call, which can be used to enhance the experience of the call for a called party.

According to a fifteenth aspect of the present invention this object is achieved by a computer program product comprising a computer readable medium, having thereon:
computer program code means, to make a portable communication device execute, when said program is loaded in the portable communication device,
select or receive a selection by a user of at least one media object for use in alerting a called party of a phone call, provide the media object for transmission to the called party, and
at least order a communication unit to set up a voice connection to a called party phone and transmit the object to the called party phone during the setting up of the voice connection, such that the called party can use the media object when being alerted about the phone call.

Another object of the present invention is to provide a computer program element that enables the provision of additional data in relation to a call, which can be used to enhance the experience of the call for a called party.

According to a sixteenth aspect of the present invention, this object is achieved by a computer program element comprising:
computer program code means to make a portable communication device execute, when said program element is loaded in the portable communication device,
select or receive a selection by a user of at least one media object for use in alerting a called party of a phone call, provide the media object for transmission to the called party, and
at least order a communication unit to set up a voice connection to a called party phone and transmit the object to the called party phone during the setting up of the voice connection, such that the called party can use the media object when being alerted about the phone call.

Another object of the present invention is to provide a method of using additional data received in relation to a call, which can be used to enhance the experience of the call for a called party.

According to a seventeenth aspect of the present invention this object is achieved by a method of using additional data received in relation to a call and comprising the steps of:
receiving a media object from a calling party phone during the set up of a voice connection, and
using the media object for alerting the called party of a call being made via the voice connection.

An eighteenth aspect of the present invention includes the features of the seventeenth aspect, wherein the object is received in the signaling phase for setting up the connection.

A nineteenth aspect of the present invention includes the features of the seventeenth aspect, wherein the object is of a certain type, the step of receiving a media object comprises also receiving a type identifier and further comprising the step of selecting a first alerting unit in dependence of the type identifier, wherein the step of using comprises using the selected alerting unit for alerting of the call using the media object.

A twentieth aspect of the present invention includes the features of the seventeenth aspect, wherein the step of receiving comprises receiving a call relevance flag and further comprising the step of alerting the called party also in a manner decided by the call relevance flag.

Another object of the of the present invention is to provide a portable communication device that provides additional data in relation to a call, which can be used to enhance the experience of the call for a called party.

According to a twenty-first aspect of the present invention, this object is achieved by a portable communication device for using additional data received in relation to a call and comprising:
a communication unit arranged to receive a media object from a calling party phone during the set up of a voice connection,
at least one alerting unit arranged to alert the called party of a call being made via the voice connection using the received media object, and
a control unit arranged to retrieve the media object from the communication unit and provide the alerting unit with the media object for alerting.

A twenty-second aspect of the present invention includes the features of the twenty-first aspect, wherein the communication unit is arranged to receive the object in the signaling phase for setting up the connection.

A twenty-third aspect of the present invention includes the features of the twenty-first aspect, wherein the object is of a certain type, the communication unit is arranged to also receive a type identifier and the control unit is further arranged to select alerting unit in dependence of the type identifier.

A twenty-fourth aspect of the present invention includes the features of the twenty-first aspect, wherein the communication unit is further arranged to receive a call relevance flag and the control unit is further arranged to select a manner of alerting decided by the call relevance flag.

A twenty-fifth aspect of the present invention includes the features of the twenty-first aspect, wherein it is a cellular phone.

Another object of the present invention is to provide a computer program product that enables the provision of additional data in relation to a call, which can be used to enhance the experience of the call for a called party.

According to a twenty-sixth aspect of the present invention, this object is achieved by a computer program product comprising a computer readable medium, having thereon:
computer program code means, to make a portable communication device execute, when said program is loaded in the portable communication device,
at least retrieve a media object that has been received from a calling party phone during a set up of a voice connection, and
at least provide an alerting unit with the media object for alerting a called party of a call being made via the voice connection.

Another object of the present invention is to provide a computer program element that enables the provision of additional data in relation to a call, which can be used to enhance the experience of the call for a called party.

According to a twenty-seventh aspect of the present invention this object is achieved by a computer program element comprising:
computer program code means to make a portable communication device execute, when said program element is loaded in the portable communication device,
at least retrieve a media object that has been received from a calling party phone during a set up of a voice connection, and
at least provide an alerting unit with the media object for alerting a called party of a call being made via the voice connection.

The invention has the following advantages. It provides additional data for use in alerting a called party that can be selected freely by the calling party. If the calling party can create his own media objects, this freedom has virtually no limitations. The additional data can then be used for enhancing the experience of the call for the called party, such as provide an image of the called party and send a special ring tone. It is rather easy to implement, which also makes the additional costs associated with the invention low.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
fig. 1 schematically shows a portable communication device in the form of a cellular phone communicating with another portable communication device, also in the form of a cellular phone, via a cellular network,
fig. 2 shows a front view of a phone in fig. 1,
fig. 3 shows a block schematic of the relevant parts of the phone in fig. 2,
fig. 4 shows a flow chart of a first method according to an embodiment of the invention performed in a phone,
fig. 5 shows a flow chart of a second method according to an embodiment of the invention performed in a phone, and
fig. 6 shows a CD Rom on which program code for executing a method according to the invention is provided.

### DETAILED DESCRIPTION OF EMBODIMENTS

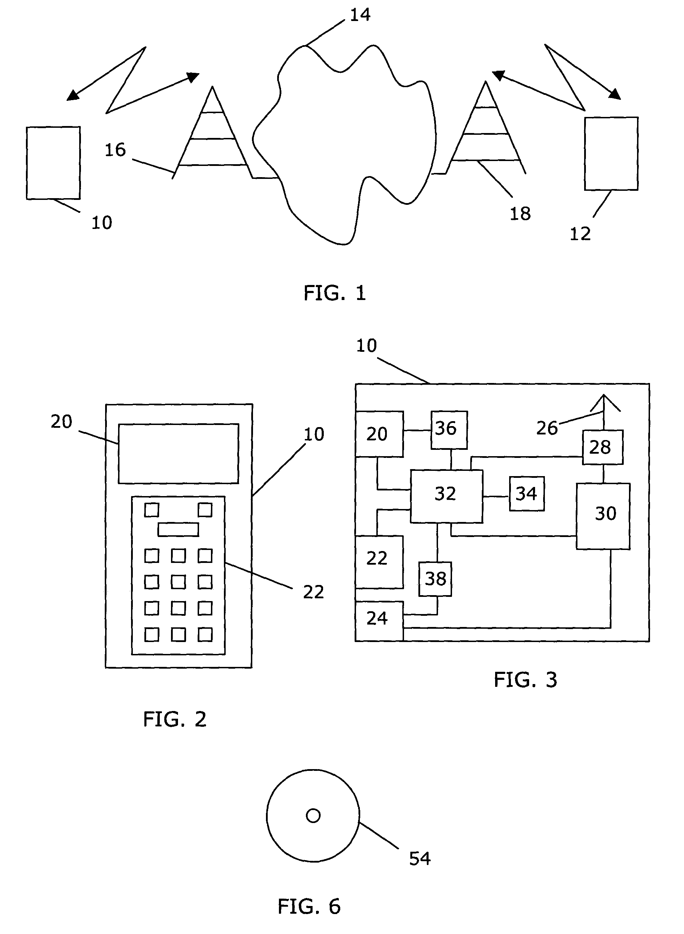

Fig. 1 schematically shows a first portable communication device 10 communicating with a second portable communication device 12 via a cellular network 14. Because of this the first portable communication device 10 is communicating with the network 14 via a first base station 16 and the second portable communication device 12 is communicating with the network 14 via a second base station 18. The network is normally a GSM network. It is however also possible that the network is a GPRS or WCDMA network or any third generation cellular network. The network can however also be a fixed network like PSTN or a network using IP telephony.

Fig. 2 shows a front view of the first portable communication device 10. It should however be realised that the second portable communication device can look the same, why this view is applicable also for this device. In the preferred embodiment the device is a cellular phone 10 having a display 20 and a keypad 22 including a number of keys. The keypad 22 is used for entering information such as making and accepting the reception of phone calls, selection of functions and responding to prompts and the display 20 is used for displaying functions and prompts to a user of the phone. The phone also includes an antenna, which is used for communication with other devices, like the second portable communication device. However the antenna is in-built in the phone and hence not shown in the figure. The phone also includes a speaker for presenting sounds to a user, which speaker is also not shown. A cellular phone is just one example of a device in which the invention can be implemented. The invention can for instance also be used in a PDA (personal digital assistant), a palm top computer, a lap top computer, a cordless phone or a smartphone, provided they have phone call handling functionalities.

Fig. 3 shows part of the interior of the cellular phone that is relevant for the present invention and that is to be used in both the first and the second portable communication devices. The phone 10 includes an antenna 26 connected to a communication unit in the form of a radio circuit 28 for enabling radio communication with the network of fig. 1. The radio circuit 28 is connected to a control unit 32. The control unit 32 is connected to the display 20 and to the keypad 22 for receiving inputs and selections from the user of the phone. The control unit 32 is also connected to the speaker 24 via a ring signal generating unit 38 for presenting ring signals to a user of the phone 10. The control unit 32 is furthermore connected to an object storage 34 and a multimedia handling unit, which in this embodiment is an image handling unit 36. The image handling unit 36 is also connected to the display 20. The radio circuit 28 is also connected to a call handling unit 30 for handling incoming and outgoing calls. The call handling unit 30 is furthermore connected to both the control unit 32 and to the speaker 24 in order to provide speech received from a voice connection set up via the network of fig. 1. It should be realised that the phone can include other units than the ones described and shown, for instance a phone book and a microphone.

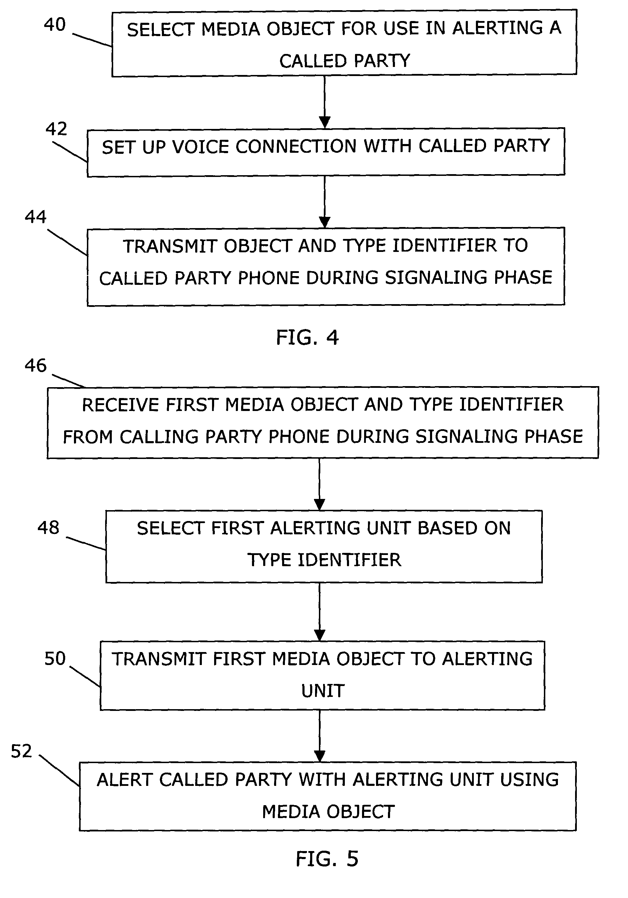

The functioning of the first portable communication device according to an embodiment of the present invention will now be described in relation to the previously described fig. 1-3 together with fig. 4, which shows a flow chart of a first method according to a preferred embodiment of the invention.

The phone 10 according to the invention can make and receive calls using the call handling unit 30 in combination with the radio circuit 28 and antenna 26. When a user of the phone 10, hereafter named calling party, wants to make a phone call to the second phone 12, he is presented, through the control unit 32 using the display 20, with an option to include a media object for use in notifying a calling party, i.e. a user of the second phone 12, of the call. The media objects storage 34 includes a number of such media objects that can be selected. The objects furthermore include a variety of different types of objects, like images, still images and moving images as well as video clips, voice messages, ring signals and text messages, which can be presented to the calling party, either in full or through a short reference. The objects furthermore include an identifier identifying the type of object, which can be a suffix to the object, like .TIF, .GIF, .TXT, JPEG etc. The calling party then selects a media object to be used in the alerting of the called party using the keys on the keypad 22, step 40. It should here be realised that a keypad is just one type of user input unit that can be used. A joystick can for instance also be used as well as voice control. The control unit 32 receives the selection and retrieves a selected media object from the media objects storage 34. The control unit 32 then provides the object to the radio circuit 28. The radio circuit 28 thereafter sets up a voice connection with the phone 12 via the antenna 26, step 42, which is done in a signaling phase. When doing this signaling the radio circuit 28 transmits the media object to the phone 12. The object and the type identifier are here included in the signaling information transferred in the signaling phase, step 44, and preferably provided at the same time as the phone number of the calling party is sent. In this way the media object is transferred to the phone 12 of the called party.

Now a second method according to the preferred embodiment of the present invention for handling the received object in the phone of the called party will be described with reference being made to fig. 1 -3 and fig. 5, which latter figure shows a flow chart of the method.

The phone 12 of the recipient or called party first receives the signaling information including the media object and type identifier from the first phone 10, which media object is thus received during the signaling phase, step 46. The object with the identifier is then transferred to the control unit 32 from the radio circuit 28. The control unit 32 then identifies which type of object it is by looking at the object identifier and then selects an alerting unit based on the identifier, step 48. Here the image handling unit 36 together with the display 20 acts a first alerting unit and the ring signal generating unit 38 together with the speaker acts as a second alerting unit. The control unit 32 then sends the media object to the selected alerting unit, step 50, which proceeds with alerting the called party of the call using the object, step 52. If the media object is an image, the called party is thus alerted by displaying the image on the display 20 and if the media object is a ring signal, the calling party is alerted via the ring signal generating unit 38 and the speaker 24. Similar selections are made for video clips and voice messages.

The alerting does not start until the whole object has been received and is ready for presentation. This can lead to a slight delay that is experienced by the calling party. It should also be realised that the presentation of the object can be used with standard alerting means, when they are applicable. An image can for instance be used together with displaying of the phone number of the calling party and the normally set ring signal of the phone. A received ring signal can likewise be used together with the presentation of the number of the calling party or an image of the calling party already provided in the phone book of the phone. If the phone of the calling party would not support the use of received media objects, the information is just ignored and then only a normal phone call is provided.

With the present invention it is thus possible to provide a number of different ways to enhance the alerting of a call for a called party. If the called party does not know what the calling party looks like, it is possible to receive information about this by simply sending an image, which is then displayed at the time of alerting. It is possible to send special ring tones, like for instance a tune playing a happy birthday song, and then the called party would hear this song instead of his/her normal ring tone. It is also possible to insert a text, with some additional information regarding for instance the subject of the call. There are thus countless ways in which the quality of the call can be enhanced for the called party. Since the calling party can select media object, he has furthermore a great freedom in choosing which objects to transfer. He can also often, depending on the functionalities provided by the phone he is using, create his own media files. If the phone is provided with a camera he can for instance create his own images.

There are a number of variations that are possible regarding the present invention. It is for instance possible to only allow one type of media object. Then there would be no need for transferring a type identifier or to select alerting unit. The media object would then be directly transferred to the alerting unit used. It is furthermore possible to put the object received in the address book of the second phone and associate it with the calling party for future use. The phone of the calling party need furthermore only include the parts described in relation to the first method, while the phone of the called party then only would need the parts described in relation to the second method. It is also possible that the called party phone sends an acknowledgment signal to the calling party phone when it has received an object and can use the object. In this way it is possible for the calling party to find out if the called party phone can use the object in alerting or not. It is furthermore possible to allow the calling party to select more than one media object to provide with a call.

According to another embodiment of the invention one such additional object can be a call relevance flag, for instance a priority flag indicating what type of priority the call has. The priority can be high, medium or low. The flag can also, additionally or instead, be a mood flag indicating what the mood of the calling party is. The mood can by any type of mood like happy, sad, angry, nervous, anxious etc. In this case the control unit of the second phone would receive these priority/mood flags and automatically select an additional type of alerting, like for instance make the display show some text representing the priority and/or mood, like important, happy etc. The flag can then also be used for selecting a ring signal or display an image corresponding to the priority and/or mood. In this case there would be a specified object associated with each flag setting that the control unit selects and presents when the flag is identified. This setting can then be made by the user or called party before a call is received.

The control unit according to the present invention is preferably provided in the form of one or more processors with corresponding memory containing the program code and the media object storage is provided in the form of a memory.

The program code mentioned above can also be provided on a data carrier such as a CD ROM disc 54 as depicted in fig. 6 or an insertable memory stick, which will perform the invention when loaded into a phone having suitable processing capabilities. The program code can also be downloaded remotely from a server either outside or inside the cellular network or be downloaded via a computer like a PC to which the phone is temporarily connected.

The present invention has several advantages. It is easy to implement. It can be implemented by just some slight modifications of the software in the phone. This also makes the cost of the invention low.

## Claims

1. Method of sending additional data with a call for use in alerting a called party comprising the steps of:
selecting, by or for a calling party, at least one media object for use in alerting a called party of a phone call, (step 40),
setting up a voice connection to a called party phone (step 42), and
transmitting the object to the called party phone during the setting up of the voice connection, (step 44), such that the called party can use the media object when being alerted about the phone call provided over the connection.

2. Method according to claim 1, wherein the object is transmitted in the signaling phase for setting up the connection.

3. Method according to claim 1 or 2, wherein the object is of a certain type and the step of transmitting the object includes transmitting also a type identifier.

4. Method according to any previous claim, wherein the object is one of the objects in the group of: image, text, video clip, voice message and/or ring tone.

5. Method according to any previous claim, wherein the step of selecting further comprises selecting at least one call relevance flag for the call and the step of transmitting comprises transmitting also the call relevance flag.

6. Method according to claim 5, wherein the call relevance flag is a flag indicating the priority of the call according to the calling party.

7. Method according to claim 5 or 6, wherein the call relevance flag is a flag indicating the mood of the calling party.

8. Portable communication device (10) for sending additional data with a call for use in alerting a called party and comprising:
a control unit (32) arranged to select or receive a selection of, by a user, at least one media object for use in alerting a called party of a phone call and provide the media object for transmission to the called party, and
a communication unit (28) arranged to set up a voice connection to a called party phone and transmit the object to the called party phone during the setting up of the voice connection, such that the called party can use the media object when being alerted about the phone call.

9. Portable communication device according to claim 8, wherein the communication unit is arranged to transmit the object in the signaling phase for setting up the connection.

10. Portable communication device according to claim 8 or 9, wherein the object is of a certain type and the step of transmitting the object includes transmitting also a type identifier.

11. Portable communication device according to any of claims 8 - 10, further comprising a media object storage (34) for storing media objects.

12. Portable communication device according to any of claims 8-11, wherein the object is one of the objects in the group of: image, text, video clip, voice message and/or ring tone.

13. Portable communication device according to any of claims 8 - 12, wherein the control unit, when selecting is further arranged to select at least one call relevance flag for the call and the communication unit is arranged to transmit also the call relevance flag.

14. Portable communication device according to any of claims 9 -13, wherein it is a cellular phone.

15. A computer program product (54) comprising a computer readable medium, having thereon:
computer program code means, to make a portable communication device (10) execute, when said program is loaded in the portable communication device, select or receive a selection by a user of at least one media object for use in alerting a called party of a phone call, provide the media object for transmission to the called party, and
at least order a communication unit (28) to set up a voice connection to a called party phone and transmit the object to the called party phone during the setting up of the voice connection, such that the called party can use the media object when being alerted about the phone call.

16. A computer program element comprising:
computer program code means to make a portable communication device (10) execute, when said program element is loaded in the portable communication device,
select or receive a selection by a user of at least one media object for use in alerting a called party of a phone call, provide the media object for transmission to the called party, and
at least order a communication unit (28) to set up a voice connection to a called party phone and transmit the object to the called party phone during the setting up of the voice connection, such that the called party can use the media object when being alerted about the phone call.

17. Method of using additional data received in relation to a call and comprising the steps of:
receiving a media object from a calling party phone during the set up of a voice connection, (step 46), and
using the media object for alerting the called party of a call being made via the voice connection (step 52).

18. Method according to claim 17, wherein the object is received in the signaling phase for setting up the connection.

19. Method according to claim 17 or 18, wherein the object is of a certain type, the step of receiving a media object comprises also receiving a type identifier and further comprising the step of selecting a first alerting unit in dependence of the type identifier, (step 48), wherein the step of using comprises using the selected alerting unit for alerting of the call using the media object.

20. Method according to any of claims 17 - 19, wherein the step of receiving comprises receiving a call relevance flag and further comprising the step of alerting the called party also in a manner decided by the call relevance flag.

21. Portable communication device (12) for using additional data received in relation to a call and comprising:
a communication unit (28) arranged to receive a media object from a calling party phone during the set up of a voice connection,
at least one alerting unit (20, 36; 24, 38) arranged to alert the called party of a call being made via the voice connection using the received media object, and
a control unit (32) arranged to retrieve the media object from the communication unit and provide the alerting unit with the media object for alerting.

22. Portable communication device according to claim 21, wherein the communication unit is arranged to receive the object in the signaling phase for setting up the connection.

23. Portable communication device according to claim 21 or 22, wherein the object is of a certain type, the communication unit is arranged to also receive a type identifier and the control unit is further arranged to select alerting unit in dependence of the type identifier.

24. Portable communication device according to any of claims 21 - 23, wherein the communication unit is further arranged to receive a call relevance flag and the control unit is further arranged to select a manner of alerting decided by the call relevance flag.

25. Portable communication device according to any of claims 21 -24, wherein it is a cellular phone.

26. A computer program product (54) comprising a computer readable medium, having thereon:
computer program code means, to make a portable communication device (10) execute, when said program is loaded in the portable communication device, at least retrieve a media object that has been received from a calling party phone during a set up of a voice connection, and
at least provide an alerting unit (20, 36; 24, 38) with the media object for alerting a called party of a call being made via the voice connection.

27. A computer program element comprising:
computer program code means to make a portable communication device (10) execute, when said program element is loaded in the portable communication device,
at least retrieve a media object that has been received from a calling party phone during a set up of a voice connection, and
at least provide an alerting unit (20, 36; 24, 38) with the media object for alerting a called party of a call being made via the voice connection.
